Europäisches Patentamt

European Patent Office

Office européen des brevets

(19)

(11) Numéro de publication: **0 002 986**
**B1**

(12) **FASCICULE DE BREVET EUROPEEN**

(21) Numéro de dépôt: **78400249.5**

(22) Date de dépôt: **19.12.78**

(51) Int. Cl.³: **B 23 K 31/02 B 23 K 9/02**

(54) Procédé et dispositif de soudage de pièces métalliques protégées .

(30) Priorité: **23.12.77 IT 3126377**

(43) Date de publication de la demande:
**11.07.79 Bulletin 79/14**

(45) Mention de la délivrance du brevet:
**29.10.80 Bulletin 80/22**

(84) Etats contractants désignés:
**BE CH DE FR GB IT LU NL SE**

(56) Documents cités:
**CH - A - 458 569**
**GB - A - 1 066 625**
**US - A - 2 280 150**
**US - A - 2 357 402**

(73) Titulaire: **S I O SOCIETA PER L'INDUSTRIA
DELL 'OSSIGENO E DI ALTRI GAS
69, Via Capecelatro
.I - 20. 148 Milano (IT)**

(72) Inventeur: **Bottiglia, Augusto
Corso di Porta Vittoria 17
Milano (IT)**

(74) Mandataire: **Leclercq, Maurice et al
L'AIR LIQUIDE SOCIETE ANONYME POUR
L'ETUDE ET L'EXPLOITATION DES PROCEDES
GEORGES CLAUDE 75, Quai d'Orsay
F - 75321 Paris Cedex 7 (FR)**

Courier Press, Leamington Spa, England.

## Procédé et dispositif de soudage de pièces métalliques protégées

La présente invention concerne le soudage de pièces métalliques protégées, par exemple des profilés ou des tôles revêtus d'un matériau volatilisable à température peu élevée, en tout cas inférieure à la température de soudage ou brasage des pièces, par exemple zinc, résines synthétiques, etc...

Généralement, pour éviter l'inconvénient de voir une partie de pièces soudées avec un revêtement dégradé, voire éliminé, on s'est vu contraint soit de renoncer à l'assemblage par soudage en se reportant à d'autres techniques d'assemblage, comme le boulonnage ou l'agrafage, soit de procéder aux opérations d'assemblage par soudage, puis à une opération ultérieure de traitement de surface pour la régénérer.

Ces façons de faire présentent des inconvénients. Les opérations d'assemblage telles que boulonnage et agrafage s'avèrent être très coûteuses et non susceptibles en tout cas de conduire à un assemblage réellement étanche, ce qui est exigé dans un certain nombre d'applications. L'operation ultérieure de traitement conduit à une opération supplémentaire de fabrication et si ce traitement ultérieur consiste en un traitement au bain, comme c'est le cas pour le zingage et certaines techniques de recouvrement par une couche de peinture, il ne peut être effectué pour les assemblages de grandes dimensions d'ailleurs difficiles à manutentionner.

Dans le brevet britannique 1.066.625, on a déjà proposé, en soudage par résistance de pièces recouvertes d'un revêtement protecteur isolant, de projeter sur les pièces à souder, dans la région où les électrodes opèrent, un fluide contenant une substance qui est électriquement conductrice et qui peut être réfrigéré, de façon à simultanément refroidir et nettoyer les électrodes de soudage. A titre de fluide, on utilise de l'eau réfrigérée. Cette façon de faire est spécifique au soudage par résistance et ne pourrait en aucun cas être utilisée en soudage à l'arc électrique. D'autre part, l'utilisation de l'eau simplement déversée dans la zone interstitielle électrode — pièces serait plus préjudiciable qu'utile, car non seulement elle perturberait le bon fonctionnement de l'arc, mais encore, du fait de la limitation nécessaire de sa température de réfrigération, nécessiterait des quantités importantes, ce qui, en refroidissant le corps des pièces perturberait considérablement le bain de soudure et pourrait même interdire sa formation.

On a également proposé, dans le brevet américain 2.280.150 de contrôler le gradient de température au voisinage d'un joint de soudure par circulation d'un fluide tel que de l'eau à l'envers du joint de soudure. Cette technique met en œuvre un conduit de circulation du fluide de refroidissement s'étendant en nappe sur toute la longeur du joint de soudure et cela grâce à un dispositif formant un conduit coextensif audit joint, dont une paroi est toujours formée par l'une des pièces à souder. Cette façon de faire, qui met en œuvre un fluide à température ambiante ou peu réfrigérée est non seulement peu satisfaisante par l'effet limité de refroidissement mais est techniquement compliquée, car le conduit de circulation doit nécessairement être conformé de façon à s'adapter exactement à la forme longitudinale du joint et sur toute la longeur de celui-ci. En outre, son domaine d'application est limité, car il ne peut concerner que les types de soudage mettant en œuvre une pièce de recouvrement total du joint assurant l'étanchéité du conduit à l'endroit du joint, sinon le fluide de circulation non seulement pourrait affecter le joint en cours de formation par ses propriétés oxydantes mais également s'échapperait du conduit de circulation à l'endroit non encore élaboré du joint de soudure.

La présente invention vise à assurer le soudage de pièces métalliques protégées d'un revêtement en matériau facilement volatilisable, sans dégrader le revêtement situé sur au moins une face des dites pièces, et permet un refroidissement intense de la zone de soudage et s'applique à tous les types de soudage, même au soudage bord à bord de deux pièces sans étanchéité envers du joint.

Selon l'invention, on effectue le refroidissement en une zone localisée à l'envers du joint exclusivement en regard du dispositif de soudage au moyen d'un fluide à très basse température, par exemple de l'azote liquide. Cette double condition du mode opératoire selon l'invention permet d'obtenir le résultat escompté. En effet, en limitant strictement à la zone de soudage l'effet du fluide réfrigéré on peut utiliser des fluides très froids qui se vaporisent quasi instantanément, ce qui permet d'utiliser exactement à l'endroit approprié la chaleur de vaporisation. De plus, l'utilisation de fluide à très basse température est également une condition importante du succès, car, contrairement à l'eau, un tel fluide peut être déversé en faible quantité, et ce qu'il importe de réaliser, c'est une action de transfert thermique brutale, sans pour autant perturber le bain de soudure.

Dans une forme préférée de mise en œuvre, on assure un prérefroidissement du revêtement avant que celui-ci ne soit soumis à l'opération de soudage.

L'invention concerne également un dispositif de soudage comprenant des moyens de soudage et des moyens de refroidissement opérant en regard et à distance des dits moyens de soudage et qui est caractérisé en ce que les moyens de refroidissement comprennent un sabot de refroidissement avec un conduit d'alimentation à vanne et un paroi en matériau thermiquement conducteur à conformation adaptée à la pièce à souder. Bien entendu, le sabot a des extensions transversale et longitudinale par rapport au joint qui sont strictement limitées au but poursuivi qui consiste à limiter l'accroissement de température de revêtement à une valeur admissible.

Les caractéristiques et avantages de l'invention ressortiront d'ailleurs de la description qui suit à titre d'exemple, en référence aux dessins annexés dans lesquels:
— la figure 1 est une vue en coupe d'un dispositif de soudage adapté au soudage bord à bord de tôle;
— la figure 2 est une vue en perspective d'une variante de réalisation d'un dispositif de soudage adapté à la fabrication de tubes;
— la figure 3 est une vue transversale d'un silo en cours de réalisation selon l'invention;
— la figure 4 est une vue partielle en élévation latérale de ce même silo;
— la figure 5 est une vue, à échelle agrandie et en coupe, d'une partie de silo selon les figures 3 et 4.

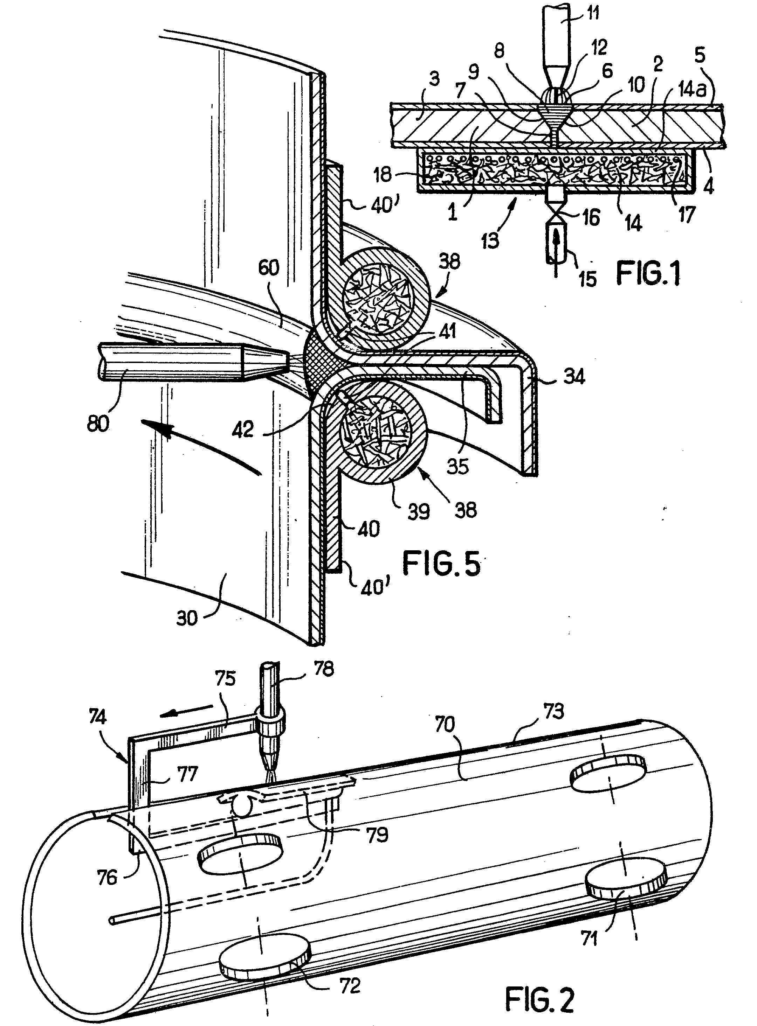

En se référant à la figure 1, deux tôles métalliques 1 et 2, chacune constituée d'un corps d'acier 3 et d'un revêtement protecteur de zinc 4 sur une face (le cas échéant d'un revêtement protecteur 5 sur l'autre face) sont disposées bord à bord le long d'un joint de soudure 6. Ici le joint 6 comporte une base étranglée 7 et un corps 8 de forme évasée délimitée substantiellement par des chanfreins 9 et 10. Le moyen de soudage est ici une torche 11 à fil d'apport 12. On a prévu du côté opposé à la torche par rapport aux tôles 1 et 2 un sabot de refroidissement 13 constitué d'un boîtier 14 en matériau thermiquement conducteur, tel le cuivre, avec un conduit d'alimentation 15 à vanne 16 pour de l'azote liquide et des trous d'évacuation 17 le long d'un bord supérieur d'une face frontale 18. Le sabot de refroidissement 13 et la torche 11 sont disposés en regard l'un de l'autre et le boîtier 14 présente une certaine extension dans le sens de joint, par exemple de l'ordre de trente centimètres, et une moindre extension dans le sens transversal au joint. Au cours de l'opération de soudage, le sabot de refroidissement 13 est maintenu en position fixe par rapport à la torche 11, soit que les tôles 1 et 2 sont fixes et les torche 11 et sabot de refroidissement 13 montés sur des supports à déplacements synchronisés, soit que les torche 11 et sabot de refroidissement 13 sont fixes et les tôles supportées par des moyens de déplacement (non représentés).

En fonctionnement, le boîtier 14 est alimentée en azote liquide par le conduit 15 et l'azote présent dans le boîtier 14 se vaporise et refroidit tout le boîtier 14 et en particulier sa paroi supérieure 14a qui est en contact avec le revêtement protecteur 4 des tôles 1 et 2.

L'azote vaporisé s'échappe par les trous 17 sur la face frontale qui se présente en regard du joint à souder. Il est conseillé pour améliorer le transfert thermique de placer dans le boîtier 14 des éléments conducteurs, par exemple des copeaux de cuivre. Le transfert thermique s'effectue donc essentiellement par conduction face contre face entre la paroi 14a du boîtier 14 et le revêtement 4 et accessoirement un refroidissement s'effectue grâce à l'azote vaporisé s'échappant par les trous 17 vers une partie de revêtement 4 qui se situe en amont de la torche de soudage 11. En pratique, les structures de sabot de refroidissement 13, les épaisseurs du revêtement protecteur 4 et du corps de tôle 3, ainsi que la vitesse de soudage étant fixés, on assure une action correcte du sabot de refroidissement par réglage de la vanne 16 d'alimentation en azote liquid, de façon qu'au point le plus chaud du revêtement 4, dont la température peut être suivie par un thermocouple convenablement placé, aucune volatilisation de ce revêtement ne se produise.

Au lieu de pratiquer les trous d'échappement d'azote gazeux sur une paroi frontale, on peut également les prévoir, en tout ou en partie, au travers de la paroi de contact 14a du boîtier 14, mais alors sont prévues avantageusement des dépressions en creux ou rainures dans cette paroi 14a, permettant l'échappement de l'azote gazeux sans perturber le contact de la paroi 14a avec le revêtement 4.

En se référant maintenant à la figure 2, on voit qu'un tube 70 conformé en cylindre par des séries de galets 71 et 72 est équipé d'un dispositif de soudage selon une génératrice 73 comprenant un support commun 74 pour une torche 78 et pour un sabot de refroidissement 79 dont un bras 75 est à l'extérieur du tube et un autre bras 76 est à l'intérieur de ce même tube, tandis qu'un montant de raccordement 77 est engagé entre les bords de la nappe tubulaire non encore jointifs.

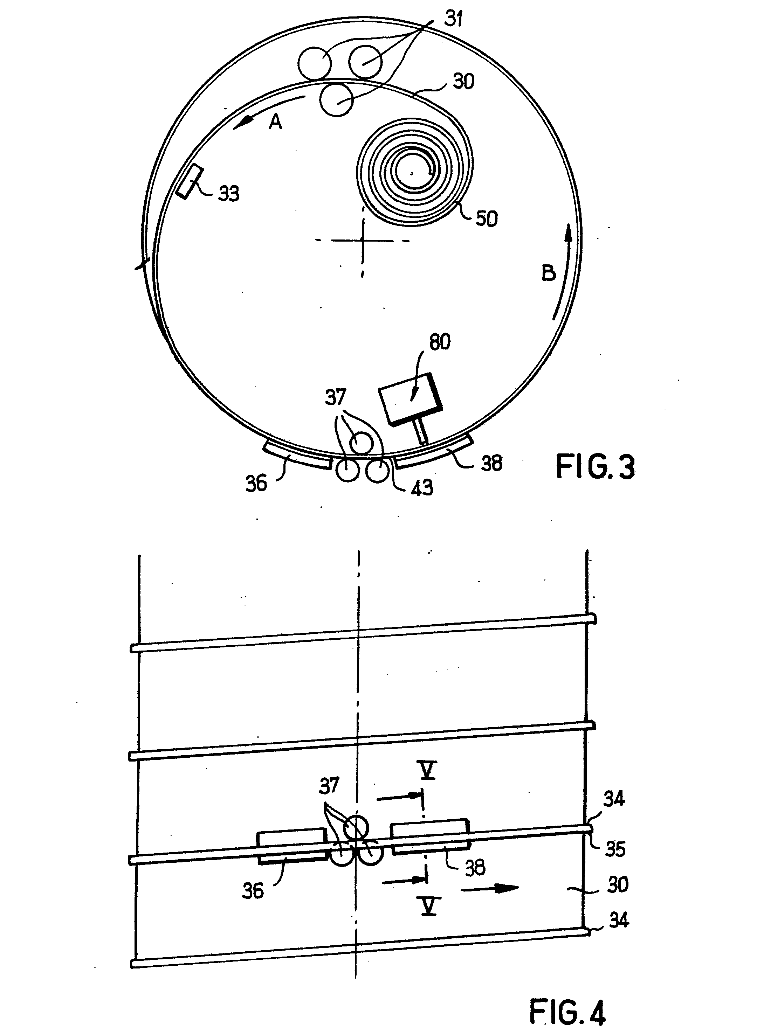

En se référant maintenant aux figures 3 à 5, on décrit un dispositif permettant la soudure de grands silos obtenus par assemblage en spirale de feuillards zingués. La bobine de feuillard zingué 50 est disposée à l'intérieur du silo à construire et est dévidée, tandis que des galets 31 permettent de donner au feuillard 30 la courbure voulue. Le feuillard 30 passe successivement au travers d'une machine à relever les bords 33 qui incurve de façon appropriée les bords supérieur et inférieur en 34 et 35 de feuillard 30. Le feuillard 30 est déroulé selon le parcours indiqué par la flèche A, de façon à prendre appui sur la face inférieure du silo. Dans la zone précédent la soudure, donc en amont selon le sens de déplacement, est ménagé un double sabot de pré-refroidissement 36 dans lequel est introduit le fluide cryogénique. D'autres groupes de galets 37 permettent un accostage parfait entre les bords des deux feuillards à souder. En aval de ces galets 37 est prévu le poste de soudage 80, en face duquel se trouve un autre double sabot de refroidissement 38, également alimenté en fluide cryogénique. Ces doubles sabots de refroidissement 36 et 38 comprennent des boîtiers tubulaires 39 et présentent une faroi de contact 40 en cuivre avec des ailettes 40'. La soudure s'effectue en 60, comme représenté sur la fig. 5. On notera, en particulier, qu'il est avantageux de prévoir l'évacuation du gaz cryogénique à travers les trous 41 dans un dégagement interstitiel 42 entre le boîtier 39 et bords 34 et 35, de manière à ce qu'il soit dirigé sur l'envers du feuillard 30. La soudure sera de préférence exécutée avec une machine automatique, de manière à ce que les différences dues aux irrégularités manuelles ne puissent influencer le déroulement correct du soudage et du refroidissement. Le silo sera ainsi engendré peu à peu en le faisant tourner lentement, au fur et à mesure que l'on fait la soudure, dans le sens de la flèche B.

Le fonctionnement est le suivant : on porte à la température de refroidissement des sabots de refroidissement 36 et 38 et puis on déroule le feuillard de la bobine 50 et on commence à faire tourner la partie cylindrique, tandis que l'on fait la soudure. Le régulation de l'introduction du fluide cryogénique se fait en relevant la température du feuillard 30 avec le thermocouple 43 qui est placé immédiatement en amont du sabot de refroidissement 38.

## Revendications

1. Procédé de soudage de pièces métalliques (1—2) (70) (30), du genre où l'on effectue un refroidissement à l'envers du joint de soudage (6) (73) (60), au moyen d'un dispositif de soudage (11) (78) (80) dont la position relative par rapport au joint (6) (73) (60) est progressivement modifée selon la direction dudit joint, applicable au soudage de pièces métalliques protégées par un revêtement (4) volatilisable à une température inférieure à la température de soudage ou brasage, caractérisé en ce que l'on effectue ledit refroidissement en une zone localisée à l'envers dudit joint (6) (73) (60) exclusivement en regard dudit dispositif de soudage (11) (78) (80), au moyen d'un fluide à très basse température, par exemple de l'azote liquide.

2. Procédé de soudage selon la revendication 1, caractérisé en ce qu'on assure un pré-refroidissement (en 36) du revêtement avant que celui-ci ne soit soumis à l'opération de soudage.

3. Procédé de soudage selon la revendication 1, caractérisé en ce que l'on règle (en 16) l'admission de fluide cryogénique en fonction de la température relevée (en 43) sur les pièces à souder, à l'endroit du revêtement (4).

4. Procédé de soudage selon la revendication 1 ou 2, caractérisé en ce que le refroidissement du revêtement (4) intervient essentiellement par conduction entre un sabot réfrigéré (13) (79) (38) et ledit revêtement (4).

5. Procédé de soudage selon la revendication 4, caractérisé en ce que le refroidissement du revêtement (4) intervient également par convection (en 17) (en 42) de vapeurs du fluide cryogénique.

6. Dispositif de soudage comprenant des moyens de soudage ou brasage (11) (78) (80) et des moyens de refroidissement (13) (79) (38) opérant en regard et à distance des dits moyens de soudage, caractérisé en ce que les moyens de refroidissement comprennent un sabot de refroidissement (13) (79) (38) avec un conduit d'alimentation (15) à vanne (16) et une paroi en matériau thermiquement conducteur (14a) à conformation adaptée à la pièce à souder.

7. Dispositif de soudage selon la revendication 6, caractérisé en ce que les moyens de refroidissement comprennent au moins un sabot de pré-refroidissement (36) décalé en amont par rapport au sabot de refroidissement (38).

8. Dispositif de soudage selon la revendication 6, caractérisé en ce que les moyens de soudage (78) et le sabot de refroidissement (79) sont montés sur des moyens de support (74 — 75 — 76) animés de mouvements identiques et synchronisés.

9. Dispositif de soudage selon la revendication 8, caractérisé en ce que les moyens de support (74 — 75 — 76) sont communs aux moyens de soudage (78) et au sabot de refroidissement (79).

10. Dispositif de soudage selon l'une quelconque des revendications 6 à 9, caractérisé en ce qu'un sabot (13) comprend un boîtier (14) équipé d'un conduit d'alimentation (15) et pourvu de trous d'évacuation (17) (41) à l'air libre au voisinage du revêtement.

11. Dispositif de soudage selon la revendication 10, caractérisé en ce que les trous d'évacuation (17) sont ménagés dans une paroi transversale de boîtier (14).

12. Dispositif de soudage selon la revendication 10, caractérisé en ce que les trous d'évacuation (42) sont ménagés dans une paroi de boîtier (39) à l'endroit d'une dépression formant dégagement (42) avec les pièces à souder.

## Claims

1. Process for welding metallic pieces (1—2) (70) (30), whereby cooling is effected at the back side of the weld joint (6) (73) (60) by means of a welding equipment (11) (78) (80) the position of which in relation to the weld joint (6) (73) (60) is progressively changed according to the direction of the said weld joint, and which is applicable for welding metal pieces protected by a covering (4) which is volatile at a lower temperature than the welding or soldering temperature, characterized in that the said cooling is effected in a zone localized at the back side of the said weld joint (6) (73) (60) exclusively opposite to the welding equipment (11) (78) (80), by means of a fluid having a very low temperature, for example liquid nitrogen.

2. Process for welding according to claim 1, characterized in that one insures precooling (at 36) the covering before subjecting it to the welding operation.

3. Process for welding according to claim 1, characterized in that the admission of the cryogenic fluid is controlled (at 16) in function of the elevated temperature (at 43) on the pieces to be welded at the place of the covering (4).

4. Process for welding according to claim 1 or 2, characterized in that cooling the covering (4) is essentially effected by conduction between a cooled carriage (13) (79) (38) and the covering (4).

5. Process for welding according to claim 4, characterized in that cooling the covering (4) is also effected by convection (at 17) (at 42) of vapors of the cryogenic fluid.

6. Welding equipment comprising welding or soldering means (11) (78) (80) and cooling means (13) (79) (38) working opposite to and spaced from the welding means, characterized in that the cooling means comprise a cooling carriage (13) (79) (38) having a feed circuit (15) including a valve (16) and having a wall of heat conductive material (14a) and a configuration adapted to the piece to be welded.

7. Welding equipment according to claim 6, characterized in that the cooling means comprise a precooling carriage (36) spaced from the cooling carriage (38) upwardly in the direction of movement of the cooling carriage (38).

8. Welding equipment according to claim 6, characterized in that the welding means (78) and the cooling carriage (79) are mounted on support means (74 — 75 — 76) moving identically and synchronically.

9. Welding equipment according to claim 8, characterised in that the support means (74 — 75 — 76) are common to the welding means (78) and the cooling carriage (79).

10. Welding equipment according to one of the claims 6 through 9, characterized in that a carriage (13) comprises a casing (14) equipped with a feed conduit (15) and having holes (17) (41) to the fresh air in neighborhood of the covering.

11. Welding equipment according to claim 10, characterized in that the holes (17) to the fresh air are arranged in a transversal wall of the casing (14).

12. Welding equipment according to claim 10, characterized in that the holes (42) to the fresh air are arranged in a wall of the casing (39) at the place of a depression forming a space (42) with the pieces to be welded.

**Patentansprüche**

1. Verfahren zum Schweißen von Metallteilen (1 — 2) (70) (30), bei dem man auf der Rückseite der Schweißverbindung (6) (73) (60) mit Hilfe einer Schweißeinrichtung (11) (78) (80), deren Lage bezüglich der Schweißverbindung (6) (73) (60) in Übereinstimmung mit der Richtung dieser Schweißverbindung fortschreitend verändert wird, eine Abkühlung bewirkt und das auf das Schweißen von Metallteilen anwendbar ist, welche durch einen Überzug (4) geschützt sind, welcher bei einer niedrigeren Temperatur als der Schweiß- oder Löttemperatur verflüchtigbar ist, dadurch gekennzeichnet, daß man die Abkühlung in einer Zone, die auf der Rückseite dieser Schweißverbindung (6) (73) (60) ausschließlich gegenüber der Schweißeinrichtung (11) (78) (80) lokalisiert ist, mit Hilfe einer Flüssigkeit oder eines Gases von sehr niedriger Temperatur, beispielsweise mit flüssigem Stickstoff, durchführt.

2. Verfahren zum Schweißen nach Anspruch 1, dadurch gekennzeichnet, daß man der Überzug (bei 36) vorkühlt, bevor er der Schweißoperation unterzogen wird.

3. Verfahren zum Schweißen nach Anspruch 1, dadurch gekennzeichnet, daß man der Zufluß der kryogenen Flüssigkeit oder des kryogen Gases in Funktion der erhöhten Temperatur (bei 43) auf den zu schweißenden Teilen an dem Überzug (4) regelt (bei 16).

4. Verfahren zum Schweißen nach Anspruch 1 oder 2, dadurch gekennzeichnet, daß die Abkühlung des Überzuges (4) im wesentlichen durch Leitung zwischen einem gekühlten Schlitten (13) (79) (38) und dem Überzug (4) erfolgt.

5. Verfahren zum Schweißen nach Anspruch 4, dadurch gekennzeichnet, daß die Abkühlung des Überzuges (4) auch durch Konvektion (bei 17) (bei 42) vom Dämpfen der kryogenen Flüssigkeit oder des kryogenen Gases erfolgt.

6. Schweißvorrichtung mit Einrichtungen zum Schweißen oder Löten (11) (78) (80) und Einrichtungen zum Abkühlen (13) (79) (38), die gegenüber den Schweißeinrichtungen und im Abstand von diesen arbeiten, dadurch gekennzeichnet, daß die Einrichtungen zum Abkühlen einen Abkühlschlitten (13) (79) (38) mit einer Zuführleitung (15) mit einem Ventil (16) und einer Wand aus einen Wärmeleitfähigen Material (14a) und mit einer Gestalt, die dem zu schweißenden Teil angepaßt ist, umfassen.

7. Schweißvorrichtung nach Anspruch 6, dadurch gekennzeichnet, daß die Einrichtungen zum Abkühlen wenigstens einen Vorkühlungsschlitten (36) umfassen, der in Bewegungsrichtung im Abstand oberhalb des Abkühlungsschlittens (38) angeordnet ist.

8. Schweißvorrichtung nach Anspruch 6, dadurch gekennzeichnet, daß die Schweißeinrichtungen (78) und der Abkühlungsschlitten (79) auf Stützeinrichtungen (74 — 75 — 76) befestigt sind, die sich identisch und synchron bewegen.

9 0 002 986 10

9. Schweißvorrichtung nach Anspruch 8, dadurch gekennzeichnet, daß die Stützeinrichtungen (74 — 75 — 76) den Schweißeinrichtungen (78) und dem Abkühlungsschlitten (79) gemeinsam zugehören.

10. Schweißvorrichtung nach einem der Ansprüche 6 bis 9, dadurch gekennzeichnet, daß ein Schlitten (13) ein Gehäuse (14) umfaßt, das mit einer Zuführleitung (15) ausgestattet ist und in die freie Luft führende Löcher (17) (41) in Nachbarschaft des Überzugs aufweist.

11. Schweißvorrichtung nach Anspruch 10, dadurch gekennzeichnet, daß die in die freie Luft führenden Löcher (17) in einer Querwand des Gehäuses (14) angebracht sind.

12. Schweißvorrichtung nach Anspruch 10, dadurch gekennzeichnet, daß die in die freie Luft führenden Löcher (42) in einer Gehäusewand (39) an der Stelle einer Vertiefung angeordnet sind, welche mit den zu schweißenden Teilen einen freien Raum (42) bilden.

0 002 986

FIG.1

FIG.5

FIG.2

31

30

A

33

50

B

80

37

36          43          38

FIG. 3

V

37

34

35

36          38          30

V

34

FIG. 4